# EUROPÄISCHE PATENTANMELDUNG

(11) **EP 2 363 361 A2**
(43) Veröffentlichungstag der Anmeldung: **07.09.2011**
(21) Anmeldenummer: 11001717.5
(22) Anmeldetag: 02.03.2011
(51) Int. Cl.: B65G 57/18

(54) **Stapelvorrichtung und Verfahren zum Stapeln länglicher Werktstücke**

(30) Priorität: 03.03.2010 DE 102010010229; 09.04.2010 DE 102010014440
(71) Anmelder: SMS Meer GmbH, 41069 Mönchengladbach (DE)
(72) Erfinder: Molt, Werner, 52076 Aachen (DE)
(74) Vertreter: Reuther, Martin

(57) **Zusammenfassung**

Zum einfachen und betriebssicheren Stapeln länglicher Werkstücke werden diese geführt abgeworfen und zielgerichtet in ihrer jeweiligen Stapelposition abgelegt. Eine Vorrichtung zum Stapeln länglicher Werstücke (160) umfasst z.B. eine Vereinzelungsvorrichtung (180), einen bezüglich einer Ablage (120) verlagerbaren Gleit-Rutsch-Förderer (140), wobei der Gleit-Rutsch-Förderer (140) einer Abwerfer umfasst.

## Beschreibung

Die Erfindung betrifft eine Stapelvorrichtung sowie ein Verfahren zum Stapeln länglicher Werkstücke, insbesondere beispielsweise zum Stapeln von Rohren und Stäben.

Derartige Stapelvorrichtungen bzw. Stapelverfahren sind beispielsweise aus der DE 28 31 248 C3 oder auch aus der DE 37 24 470 A1 bekannt und dienen dazu, längliche Werkstücke geordnet lagenweise in einem Stapel abzulegen.

So schlägt die DE 28 31 248 C3 vor, die Werkstücke vereinzelt über ein Schwert in ihre Stapelposition abrollen zu lassen, wobei durch eine bewegliche Anlage ein sicheres Ablegen gewährleistet werden soll. Hierbei rollen die länglichen Werkstücke nach einer Vereinzelungsvorrichtung über einen der Vereinzelungsvorrichtung nachgeordneten Gleit-Rutsch-Förderer, welcher auch das Schwert umfasst, bis zu Ihrer Stapelposition, wobei sie dort fall- und stoßfrei abgelegt werden sollen.

Hiervon abweichend offenbart die DE 37 24 470 A1 eine Vorrichtung zum Stapeln länglicher Werkstücke in definierten Stapelpositionen innerhalb eines Stapels auf einer Ablage, bei welcher die Werkstücke mittels zweier beidseits der Werkstücke angeordneter Förderbänder vereinzelt in Richtung einer Abwurfposition gefördert und von dieser Abwurfposition dann in Ihrer Stapelposition fallengelassen werden.

Ebenso ist es bekannt, die Werkstücke durch eine Vielzahl von Manipulatorarmen, die in definierten Abständen längs der zu bildenden Stapel angeordnet sind, zu ergreifen und in den jeweiligen Stapelpositionen innerhalb des zu bildenden Stapels abzulegen. Derartige Anordnungen sind ebenso äußerst komplex, da insbesondere sämtliche Manipulatorarme synchronisiert angesteuert werden müssen. Außerdem müssen die Manipulatorarme nach dem Ablegen des Werkstücks wieder zurückgeführt werden, um das nächste Werkstück zu greifen, was sehr zeitaufwändig ist. Dieses führt dazu, dass unter Umständen zwei Sätze an Manipulatorarmen versetzt aber synchronisiert bewegt werden müssen, was noch komplexer und kostenintensiver ist.

Es ist Aufgabe derartige Stapelvorrichtungen bzw. Stapelverfahren dahingehend weiterzuentwickeln, dass diese ein möglichst betriebssicheres Stapeln bei hohem Durchsatz ermöglichen.

Als Lösung wird einerseits eine Vorrichtung zum Stapeln länglicher Werkstücke in definierten Stapelpositionen innerhalb eines Stapels auf einer Ablage vorgeschlagen, bei welchem die Stapelvorrichtung eine Vereinzelungsvorrichtung und einen der Vereinzelungsvorrichtung nachgeordneten Gleit-Rutsch-Förderer mit einem Gestell umfasst, welches vertikal und horizontal in eine Abwurf-/Ablageposition bzgl. der Ablage verlagerbar ist, und welches sich dadurch auszeichnet, dass der Gleit-Rutsch-Förderer einen Abwerfer umfasst.

Ebenso schlägt die Erfindung ein Verfahren zum Stapeln länglicher Werkstücke in definierten Stapelpositionen innerhalb eines Stapels vor, welches sich dadurch auszeichnet, dass die Werkstücke zunächst vereinzelt, durch Eigenbewegung in Richtung einer Abwurfposition gefördert und dann in Ihre Stapelposition fallengelassen werden.

In Abweichung von der in der DE 28 31 248 C3 dargestellten Lösung, welche bei der Verwendung eines längeren Schwertes auch das Ablegen einer gesamten Lage in einem Arbeitsschritt ermöglicht, wie dieses in jüngster Zeit für entsprechende Stapelvorgänge üblich war, verzichten die vorgenannten erfindungsgemäßen Stapelverfahren bzw. Stapelvorrichtungen auf ein fall- und stoßfreies Ablegen der Gegenstände, was jedoch den großen Vorteil mit sich bringt, dass die gesamte Anlage wesentlich einfacher bauen kann, da wesentlich weniger Steuervorgänge und separat anzusteuernde Faktoren notwendig sind, um ein betriebssicheres und schnellen Stapeln zu gewährleisten.

Hierbei ist es insbesondere von Vorteil, wenn eine Fallhöhe, aus welcher das Werkstück fallengelassen wird, größer als der halbe Werkstückdurchmesser, vorzugsweise größer als der Werkstückdurchmesser ist. Die Fallhöhe kann - je nach konkretem Werkstück - sogar mehrere Werkstückdurchmesser, ggf. über sechs Werkstückdurchmesser, betragen. Es hat sich herausgestellt, dass insbesondere Rohre und Stäbe auch bei derartig großen Fallhöhen, solange die Werkstücke nicht zu schwer werden, ohne Beschädigung aufeinander zu einem Stapel fallengelassen werden können. Je nach konkreten Gegebenheiten, kann dieser Fall geführt sein, indem beispielsweise der Gleit-Rutsch-Förderer vertikal ausgerichtete Gleitführungen aufweist, welche das Werkstück auch bei größeren Fallhöhen entsprechend führen.

Insbesondere bei schwereren oder aber auch bei empfindlicheren Werkstücken kann der Abwerfer einen Zwischenhalter umfassen, von welchem aus das Werkstück jeweils fallengelassen werden kann. Ein derartiger Zwischenhalter kann beispielsweise rein passivisch ausgebildet und unter anderem als Kipphebel ausgestaltet sein, auf welchen das jeweilige Werkstück auffallen kann. Durch die hierbei auf den Hebel auftretenden Kräfte, sei es durch das Gewicht oder sei es die beim Abbremsen auftretenden Kräfte, kann der Zwischenhalter dann passivisch geöffnet und das Werkstück wieder freigeben. Hierzu können beispielsweise geeignete Gegengewichte oder aber auch Federn beispielsweise geeignet genutzt werden.

Andererseits kann der Zwischenhalter auch aktiv ausgebildet sein, indem er beispielsweise über einen motorischen Antrieb, sei er elektrisch oder hydraulisch gesteuert, das Werkstück zu gegebenen Zeitpunkten fallen lässt.

Insbesondere bei verhältnismäßig schweren Werkstücken kann der Gleit-Rutsch-Förderer einen Werkstücktransport umfassen, welcher insbesondere auch senkrecht wirksam ausgebildet sein kann. Auf diese Weise wird ein entsprechendes Werkstück über einer ausreichend lange Zeit geführt, um auf diese Weise insbesondere zu verhindern, dass dieses zu viel Energie aufnimmt und eventuell gefährliche Betriebszustände erreicht werden.

In diesem Zusammenhang sei erwähnt, dass ein Gleit-Rutsch-Förderer durchaus Baugruppen aufweisen kann, welche sich gemeinsam mit dem Werkstück bewegen, wie beispielsweise Greifer oder Anlagen, welche an Förderbändern befestigt sind oder entlang von Führungsbahnen oder Ähnlichem bewegt werden. Wesentliches Merkmal eines Gleit-Rutsch-Förderers ist, dass dieser wenigstens eine im Verhältnis zur Förderrichtung des Werkstücks stillstehende Baugruppe umfasst, entlang welcher dieses Werkstück gleitet, rollt oder rutscht. Diese Baugruppe kann jedoch beispielsweise auch verlagerbar ausgebildet sein, um z.B. verschiedene Stapelpositionen gezielt anfahren zu können.

Insbesondere kann bei einem derartigen Gleit-Rutsch-Förderer eine Eigenbewegung, also eine im Wesentlichen durch das Eigengewicht des jeweiligen Werkstücks bedingte Bewegung, der Werkstücks erfolgen, was einen sehr unkomplizierten und betriebssicheren Ablauf bedingt.

Kumulativ bzw. alternativ zu den vorgenannten Merkmalen vorliegender Erfindung wird zu Lösung der oben stehenden Aufgabe eine Vorrichtung zum Stapeln länglicher Werkstücke in definierten Stapelpositionen innerhalb eines Stapels auf einer Ablage vorgeschlagen, bei welcher die Stapelvorrichtung eine Vereinzelungsvorrichtung und einen der Vereinzelungsvorrichtung nachgeordneten Abwerfer umfasst und welche sich dadurch auszeichnet, dass der Abwerfer eine seitliche Anlage im Bereich der Stapelposition aufweist.

In Abweichung von der in der DE 37 24 470 A1 dargestellten Ausführungsform ermöglicht diese Ausgestaltung, ein Werkstück abzuwerfen, bzw. fallen zu lassen und dennoch sicherzustellen, dass dieses Werkstück zielgerichtet in der gewünschten bzw. definierten Stapelposition zur Ruhe kommt.

Vorzugsweise umfasst die seitliche Anlage eine Anstelleinrichtung zur Anstellung der Anlage in Bezug auf die jeweilige Stapelposition. Auf diese Weise ist es insbesondere möglich, eine Anlage an der Seite der Stapelposition vorzusehen, welche einem bereits in derselben Lage abgelegten Werkstück abgewandt ist. Hierdurch wird die Stapelposition einerseits durch das bereits abgelegte Werkstück und andererseits durch die Anlage begrenzt, sodass das Werkstück beim Abwerfen bzw. Fallenlassen betriebssicher in der definierten bzw. gewünschten Stapelposition zur Ruhe kommt.

Vorzugsweise weist der Abwerfer beidseits der Stapelposition eine seitliche Anlage auf, sodass insbesondere zu Beginn einer Lage die Stapelposition durch die beiden seitlichen Anlagen beidseits entsprechend definiert wird und auch in diesen Betriebszustand das Werkstück in der gewünschten bzw. definierten Stapelposition betriebssicher zur Ruhe kommt. Darüber hinaus hat ein Abwerfer mit beidseits der Stapelposition vorgesehenen seitlichen Anlagen den Vorteil, dass die Stapelrichtung beim Lagenaufbau ohne weiteres gewechselt werden kann und in beiden Stapelrichtungen ohne weitere zusätzliche Maßnahmen eine seitliche Anlage zur Verfügung steht, welche auf der einem bereits ablegten Werkstück gegenüberliegenden Seite einer Stapelposition entsprechend angestellt werden kann.

Die Stapelvorrichtung baut besonders einfach, wenn die seitliche Anlage an einem Gestell des Abwerfers angeordnet ist. Sie kann dann ohne weiteres gemeinsam mit dem Abwerfer bewegt werden. Auch ist es möglich, die seitliche Anlage bzw. deren Verlängerung als Baugruppe eines Gleit-Rutsch-Förderers zu nutzen. Ebenso kann umgekehrt eine gleitend führende Baugruppe eines Gleit-Rutsch-Förderers als seitliche Anlage genutzt werden.

Darüber hinaus wird die vorstehend dargelegte Aufgabe kumulativ bzw. alternativ zu den übrigen Merkmalen vorliegender Erfindung durch eine Vorrichtung zum Stapeln länglicher Werkstücke in definierten Stapelpositionen innerhalb eines Stapels auf einer Ablage gelöst, bei welcher die Stapelvorrichtung eine Vereinzelungsvorrichtung und einen der Vereinzelungsvorrichtung nachgeordneten Abwerfer umfasst und welche sich dadurch auszeichnet, dass die Ablage Neigungsmittel aufweist.

In Abweichung zu den Lösungen nach der DE 28 31 248 C3 und der DE 37 24 470 A1 ermöglichen es die Neigungsmittel, den Neigungswinkel der Ablage zu verändern, während letzterer bei den Vorrichtungen nach der DE 28 31 248 C3 bzw. bei der DE 37 24 470 A1 unveränderbar ist.

Durch einen derartig veränderbaren Neigungswinkel können beispielsweise die ersten Werkstücke der ersten Lage auf einer geneigten Ablage abgelegt werden, wodurch insbesondere bei runden Werkstücken sichergestellt ist, dass diese in der ersten Lage nicht verrutschen. Für das Stapeln der zweiten Lage kann die Ablage dann spätestens horizontal angeordnet werden, wodurch der gesamte Stapel stabilisiert werden kann. Hierdurch ist es dann insbesondere möglich, einen Stapel auch ohne durchgängige seitliche, feststehende Ablagewände auszugestalten, beispielsweise als Pyramide oder in Sechseckform.

Dementsprechend wird auch unabhängig von den übrigen Merkmalen vorliegender Erfindung ein Verfahren zum Stapeln länglicher Werkstücke in definierten Stapelpositionen innerhalb eines Stapels vorgeschlagen, welches sich dadurch auszeichnet, dass zumindest die ersten Werkstücke der ersten Lage auf einer geneigten Ablage abgelegt werden und die Ablage vor dem Stapeln der zweiten Lage horizontal angeordnet wird.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1: eine perspektivische Teilansicht einer ersten Stapelvorrichtung;
- Figur 2: eine Seitenansicht der Stapelvorrichtung nach Figur 1;
- Figur 3: eine perspektivische Ansicht einer weiteren Stapelvorrichtung;
- Figur 4: eine Seitenansicht der Stapelvorrichtung nach Figur 3;
- Figur 5: einen Stapelvorgang nach rechts der Stapelvorrichtungen nach Figuren 1 bis 4;
- Figur 6: das Erreichen eines Lagenendes bei einem Stapelvorgang der Stapelvorrichtung nach Figuren 1 bis 4;
- Figur 7: den Beginn einer neuen Lage bei einem Stapelvorgang der Stapelvorrichtungen nach Figuren 1 bis 4;
- Figur 8: einen Stapelvorgang nach links der Stapelvorrichtung nach Figuren 1 bis 4;
- Figur 9: eine schematische Seitenansicht der Einbindung der Stapelvorrichtung nach Figuren 3 und 4 in ein Fördersystem;
- Figur 10: einen Heber für eine Stapelvorrichtung nach Figuren 1 bis 4; und
- Figur 11: den Heber nach Figur 10 in eine anderen Betriebsstellung.

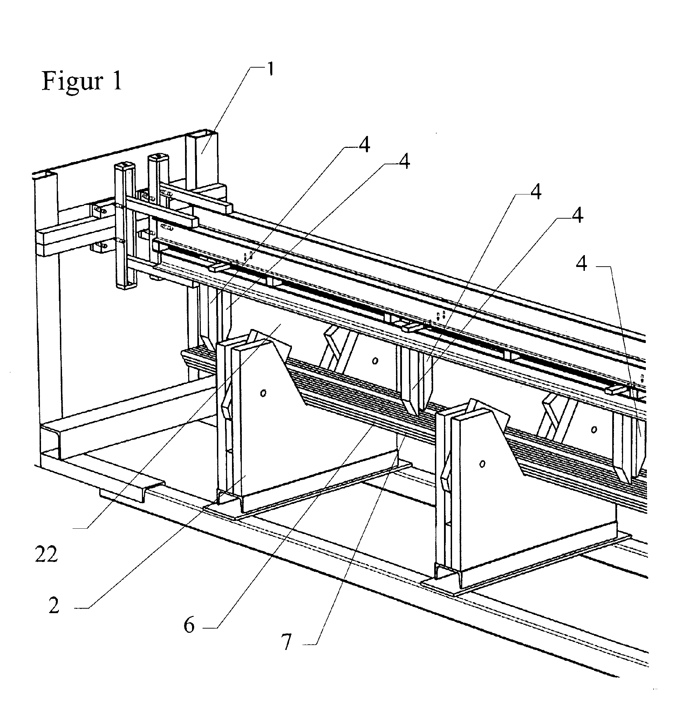

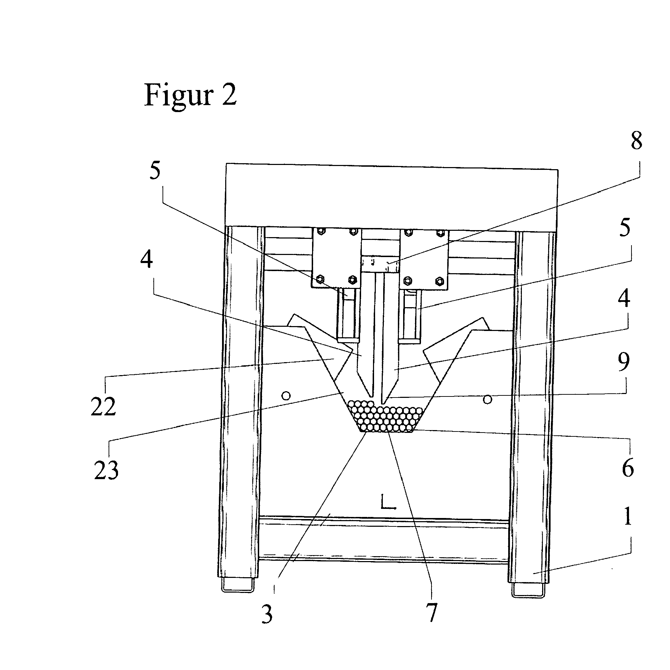

Die in Figuren 1 und 2 dargestellte Stapelvorrichtung weist ein Hauptgestell 1 auf, welches mehrere Ablagekörper 2 (exemplarisch beziffert) trägt, die eine Ablage 3 für Werkstücke 6 bilden. Diese Werkstücke werden hierbei über Rutschführungen 4 (exemplarisch beziffert) zu einem Stapel 7 gestapelt, wobei die Rutschführungen 4 jeweils an Rutschführungsheber 5 angeordnet sind und in Ihrem oberen Bereich mit einer Vereinzelungsvorrichtung 8 zusammen wirken.

Durch die Rutschführungsheber 5 können die Rutschführungen 4 jeweils individuell angehoben werden, sodass die Rutschführungen einerseits bis unmittelbar über die jeweilige Lage in denen die Werkstücke 6 abgelegt werden sollen, angestellt werden können. Insbesondere können die Rutschführungen 4 jeweils beidseits einer Stapelposition auf verschiedenen Höhen angeordnet werden, sodass diese jeweils seitliche Anlagen 9 definieren können, welche sicherstellen, dass ein Werkstück 6 in der gewünschten bzw. definierten Stapelposition zur Ruhe kommt, wenn es die Rutschführungen 4 entlang nach unten fällt.

Wie unmittelbar ersichtlich, ist die Anlage 9 gemeinsam mit der Rutschführung 4, welche bei diesem Ausführungsbeispiel einen Gleit-Rutsch-Förderer bildet, verlagerbar.

Bei diesem Ausführungsbeispiel weisen die Ablagekörper 2 noch seitliche Zusatzstützen 22 (lediglich exemplarisch beziffert) auf, welche als ergänzend sichernde seitliche Wandungen dienen. Darüber hinaus weisen die Ablagekörper sich nach oben hin öffnende seitliche Wandungen 23 auf, die ebenfalls der bestimmungsgemäßen Ausformung des Stapels 7 dienen. Je nach konkreter Stapelform kann auf die Zusatzstützen 22 bzw. auf bestimmte Teile der seitlichen Wandungen 23 verzichtet werden.

Im Betrieb werden die Werkstücke 7 über die Vereinzelungsvorrichtung 8 der zwischen den jeweils paarweise angeordneten Rutschführungen 4 gebildeten Spalte zugeführt und von dort fallen gelassen. Insoweit dient bei diesem Ausführungsbeispiel die Vereinzelungsvorrichtung 8 unmittelbar als Abwerfer. Die Werkstücke 6 fallen dann gleitend und rutschend entlang der Rutschführungen 4 nach unten in ihre durch die Rutschführungen 4 vorgegebene Stapelposition, wobei diese - wie insbesondere in Figur 2 ersichtlich - auch durch ein bereits abgelegtes bzw. abgeworfenes Werkstück 6 und die Anlage 9 definiert werden kann.

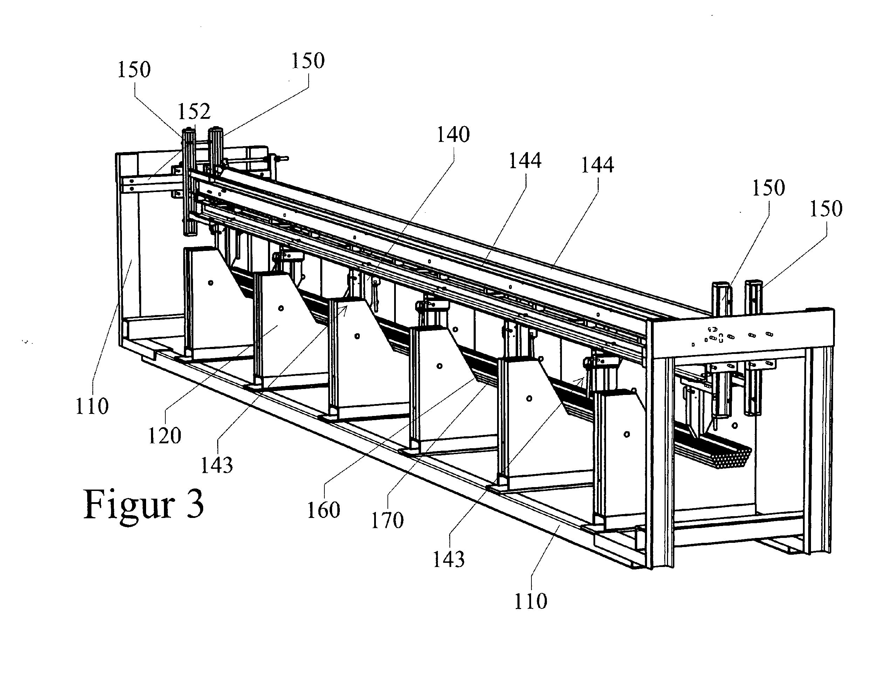

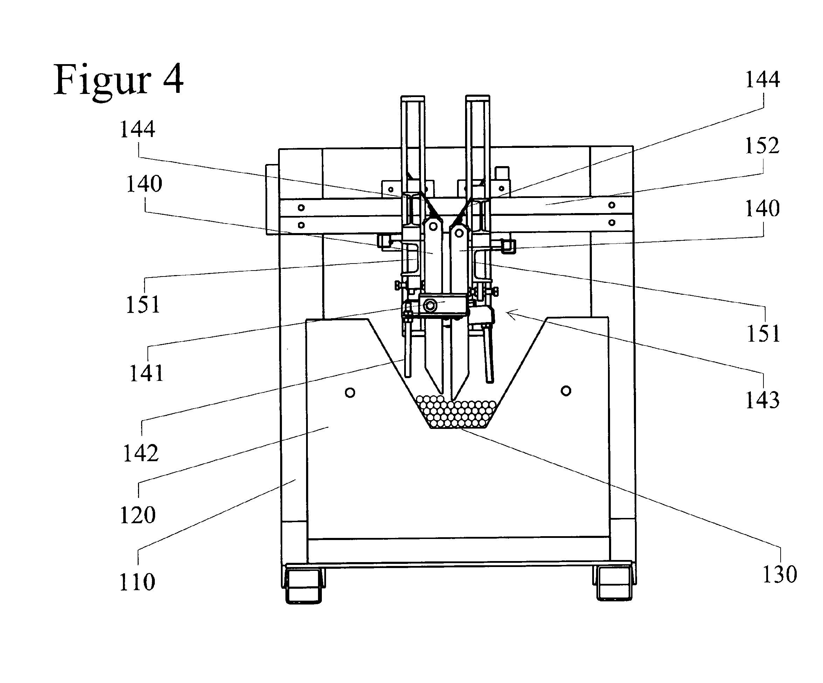

Das in den Figuren 3 und 4 dargestellte Ausführungsbeispiel entspricht im Wesentlichen dem Ausführungsbeispiel nach Figuren 1 und 2. Insoweit sind ähnlich wirkende Baugruppen auch ähnlich beziffert, wobei zur Unterscheidung um eine Zehnerstelle bzw. um 100 erhöhte Bezugsziffern verwendet werden.

Insoweit weist die Stapelvorrichtung nach Figuren 3 und 4 ein Hauptgestell 110 auf, welches eine Vielzahl an Ablagekörpern 120 (lediglich exemplarisch beziffert) trägt. Auch diese Ablagekörper 120 weisen geneigte seitliche Wandungen 123 auf, um einfach und betriebssicher die gewünschte Stapelform bereitstellen zu können. Wie unmittelbar ersichtlich, können in einer abgewandelten Ausführungsform die Ablagekörper 120 senkrecht bzw. vertikal geteilt und in ihrem unteren Bereich überlappend ausgebildet sein, sodass durch eine horizontale Verlagerung der jeweiligen Ablagekörperpaare die Breite der Ablage ohne weiteres an individuelle Bedürfnisse angepasst werden kann. Es versteht sich des Weiteren, dass in einer weiteren abgewandelten Ausführungsform auch die seitlichen Wandungen einstellbar bzw. bewegbar, und insbesondere in ihrer Neigung veränderbar, ausgebildet sein können.

Auch dieses Ausführungsbeispiel weist Rutschführungen 140 auf, welche jeweils an Rutschführungshebern 150 horizontal und vertikal verlagerbar angeordnet sind. Hierzu sind die Rutschführungen 140 an Tragebalken 151 angeordnet, die ihrerseits wieder mit den Rutschführungshebern 150 verbunden sind, sodass die Rutschführungen 140 gemeinsam über die Tragebalken 151 von den Rutschführungshebern 150 angehoben werden können.

Die Rutschführungsheber 150 ihrerseits sind horizontal verlagerbar an Querträgern 152 angeordnet, sodass hierdurch einerseits der horizontale Abstand zwischen den Rutschführungen 140 und andererseits die horizontale Stapelposition der Rutschführungen 140 verändert werden kann.

Jeweils eine der paarweise angeordneten Rutschführungen 140 trägt einen Zwischenhebel 141, der mit einem stabförmigen Gegengewicht 142 versehen ist und drehbar an der jeweiligen Rutschführung 140 gelagert ist. Dieser Zwischenhebel 141 dient als Zwischenhalter 143, wobei das stabförmige Gegengewicht 142 derart angeordnet ist, dass der Zwischenheben 141 in unbelastetem Zustand ungefähr vertikal ausgerichtet ist. Fällt nunmehr ein Werkstück 160 zwischen den Rutschführungen 140 hindurch auf den Zwischenhebel 141, wird dieses abgebremst und öffnet durch die hierbei auftretenden Kräfte den Zwischenhalter 143, indem das Gegengewicht 142 angehoben wird. Auf diese Weise wird das Werkstück 160 abgebremst und die Auftreffgeschwindigkeit in der Stapelposition entsprechend reduziert, wobei der Zwischenhebel 14 nunmehr als Abwerfer dient.

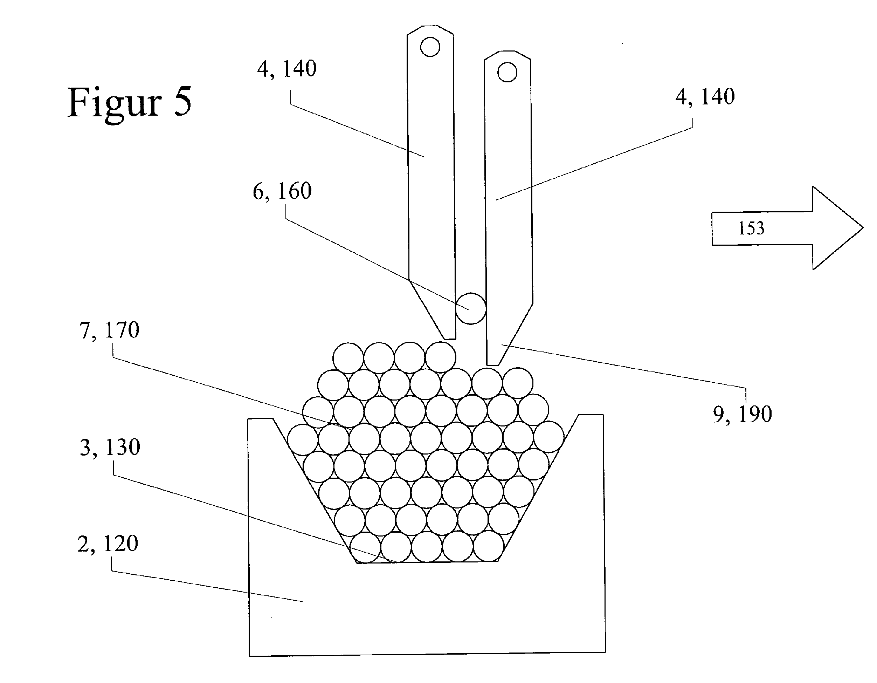

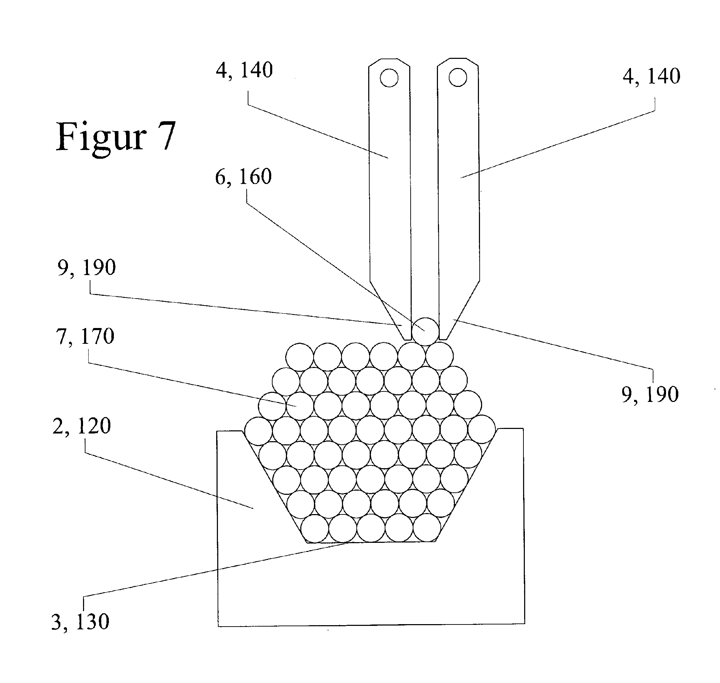

Wie in den Figuren 5 bis 8 unmittelbar ersichtlich, kann durch die Anordnung nach Figuren 1 bis 4, und zwar insbesondere durch unterschiedliches Anheben der Rutschführungen 4, 140 jeweils eine äußerst betriebssicher definierte Stapelposition bereitgestellt werden, in welche die Werkstücke 6, 160 betriebssicher fallen können. Hierbei bilden die Rutschführungen 140, jeweils durch die Rutschführungsheber 150 in geeigneter Weise angesteuert, insbesondere in Bewegungsrichtung 153 (dargestellt durch einen Pfeil) eine Anlage 9, 190, um auf diese Weise bewegungsrichtungsseitig eine Stapelposition zu definieren. An der, der Bewegungsrichtung abgewandten Seite erfolgt diese Definition vorzugsweise durch ein Werkstück 6, 160.

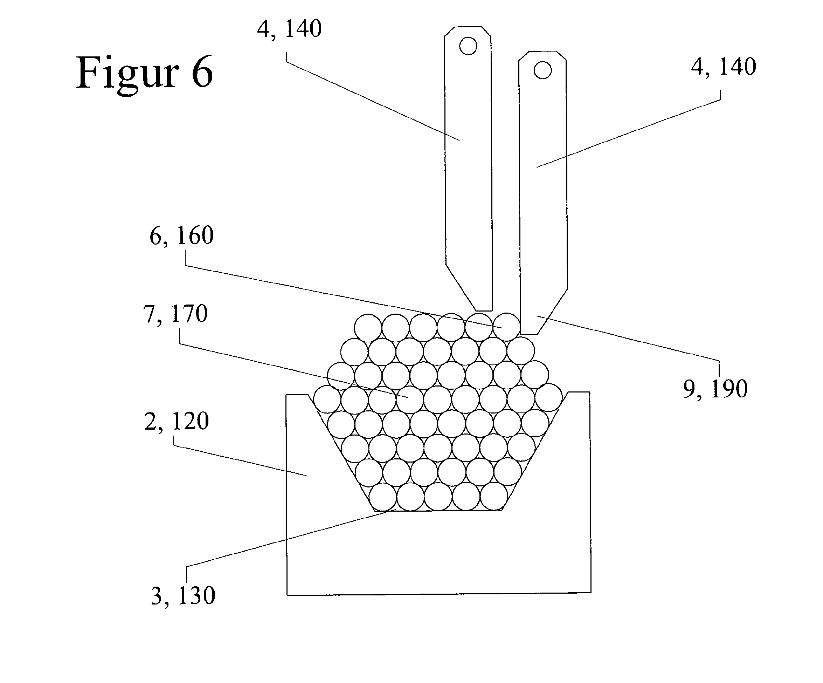

Wie in Figur 6 dargestellt, gilt dieses auch am Ende einer Lage, wo letztlich die Bewegungsrichtung 153 umkehrt bzw. der Stapelvorgang des Stapels 7, 170 abgeschlossen ist.

Auch zu Beginn einer neuen Lage kann durch die Rutschführungen 4, 140 bzw. deren Anlagen 9, 190 eine Stapelposition betriebssicher definiert werden, indem beide Rutschführungen 4, 140 auf ungefähr gleicher horizontaler Höhe angeordnet werden. Selbiges gilt dementsprechend für die Anlagen 9, 190. Hierbei versteht es sich, dass bei den hier ausgeführten Ausführungsbeispielen insbesondere im unteren Bereich eines Stapels 7, 170 eine horizontale Anordnung beider Anlagen 9, 190 nicht notwendig ist, da durch die seitlichen Wandungen 23, 123 eine entsprechende Anlage an der Außenseite eines Stapels 7, 170 gebildet ist.

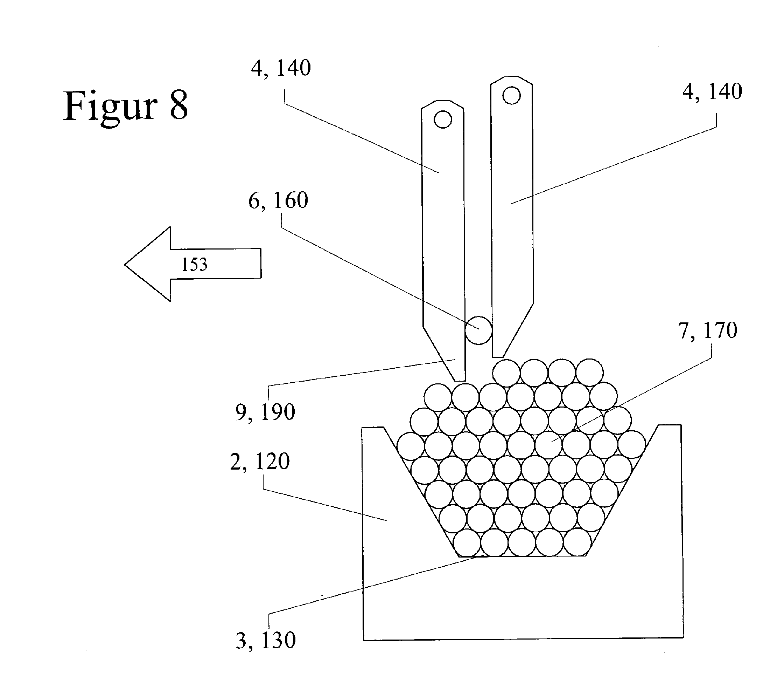

Wie Figur 8 im Vergleich zu Figur 5 darlegt, erfolgt die Bildung einer Anlage 9, 190 in umgekehrter Weise, wenn die Bewegungsrichtung 153 umgekehrt wird.

Es kann von Vorteil sein, die Ablagekörper 2, 120 bzw. die Ablagen 3, 130 zu neigen, sodass eine schräg geneigt gegenüber der horizontalen geneigte untere Ablagefläche vorliegt. Auf diese Weise kann insbesondere bei der ersten Lage gewährleistet werden, dass die jeweils abgelegten Werkstücke in ihrer Ruheposition verbleiben. Mit Beginn der zweiten Lage ist eine derartige Neigung in der Regel nicht mehr bzw. nur bei besonderen Konstellationen der Stape 7, 170 notwendig, sodass die Ablagekörper 2, 120 bzw. die Ablage 3, 130 wieder horizontal ausgerichtet werden können, wodurch der Stapel 7, 170 in der Regel an sich stabilisiert werden kann. Je nach konkreter Ausführung kann die Neigung beibehalten werden, wodurch dann - ggf. - auf die seitlichen Wandungen 23, 123 bzw. auf Teile der seitlichen Wandungen 23,123 verzichtet werden kann.

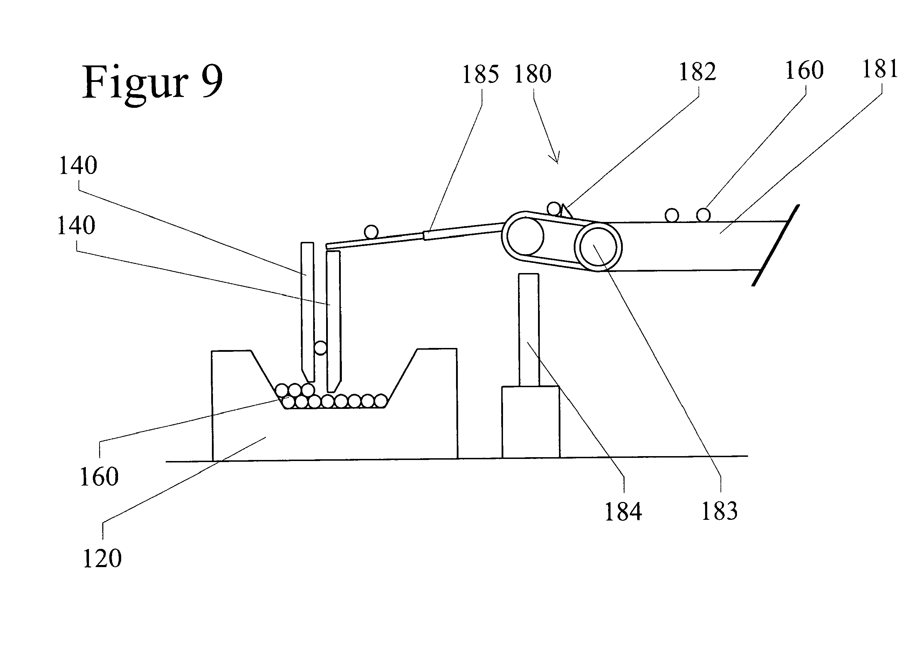

Die Werkstückzufuhr der Werkstücke 160 zu der in Figuren 3 und 4 dargestellten Stapelvorrichtung kann beispielsweise über die schematisch dargestellte Anordnung nach Figur 9 erfolgen.

Hierbei werden die Werkstücke über einen Quertransport 181 beispielsweise unsortiert und in dichter Folge der Stapelvorrichtung zugeführt. Am Ende des Quertransports 181 werden die Werkstücke 160 von den Zähnen 182 eines umlaufenden Kettenförderers 183 ergriffen, welcher in an sich bekannter Weise als Vereinzelungsvorrichtung 180 dient. wie in der Figur ersichtlich, kann hier auch lediglich ein Zahn ausreichend sein, wobei in dieser Darstellung an sich auf eine Zeichnung aller Zähne 182 verzichtet wurde, da bei lediglich einem Zahn eine sehr hohe Drehgeschwindigkeit des Kettenförderers 183 notwendig wäre.

Das den Rutschführungen 140 zugewandte Ende des Kettenförderers 183 ist mit einer Höhenverstellung 184 versehen, sodass diese Seite des Kettenförderers 183 einem Ausbau des Stapels 170 und der hieraus resultierenden vertikalen Verlagerung der Rutschführungen 140 folgen kann. Von diesem Ende des Kettenförderers 183 führt eine Rutsche 185 zu den Rutschführungen 140, wobei die Rutsche 185 zweiteilig ausgebildet ist, sodass sie einer horizontalen Verlagerung der Rutschführungen 140 ohne weiteren folgen kann.

Um auf einfacher Weise sicherzustellen, dass die Werkstücke 160 auch in den Spalt zwischen den jeweiligen Rutschführungen 140 gelangen, ist an deren oberen Ende jeweils eine Trichterschräge 144 vorgesehen, welche bei diesem Ausführungsbeispiel über die gesamte Breite zwischen den Rutschführungshebern 150 reicht (siehe insbesondere Figuren 3 und 4). Die beiden Trichterschrägen 144 bilden hierbei einen Trichter, in welchen die Werkstücke 160 leicht von der Rutsche 185 einfallen können. Es versteht sich, dass auch einzelne Trichterschrägen je einzelner Rutschführung 140 oder sonstige Hilfsmittel zur Verbesserung der Werkstückführung entsprechend vorteilhaft einsetzbar sind.

Insofern bilden bei diesem Ausführungsbeispiel die Rutsche 185, die Trichterschräge 144 sowie die Rutschführung 140 einen der Vereinzelungsvorrichtung nachgeordneten Gleit-Rutsch-Förderer.

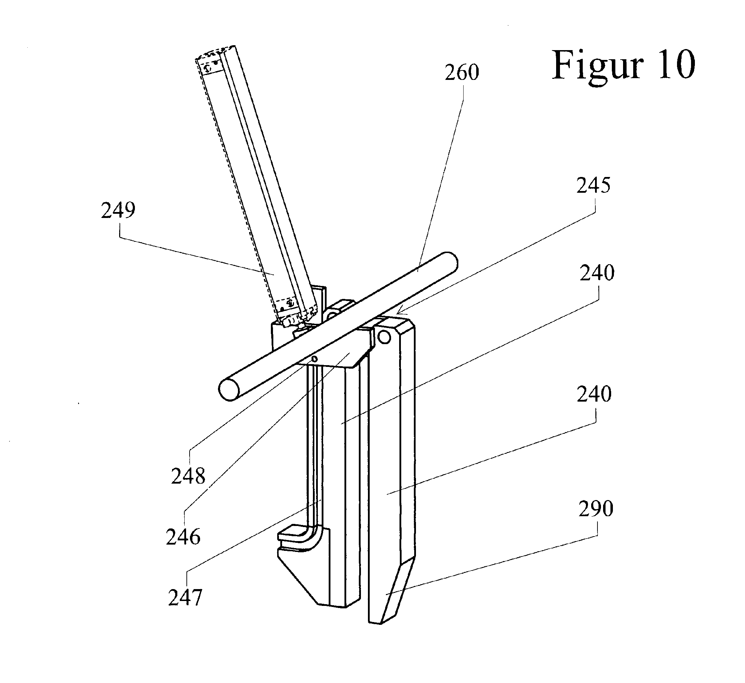

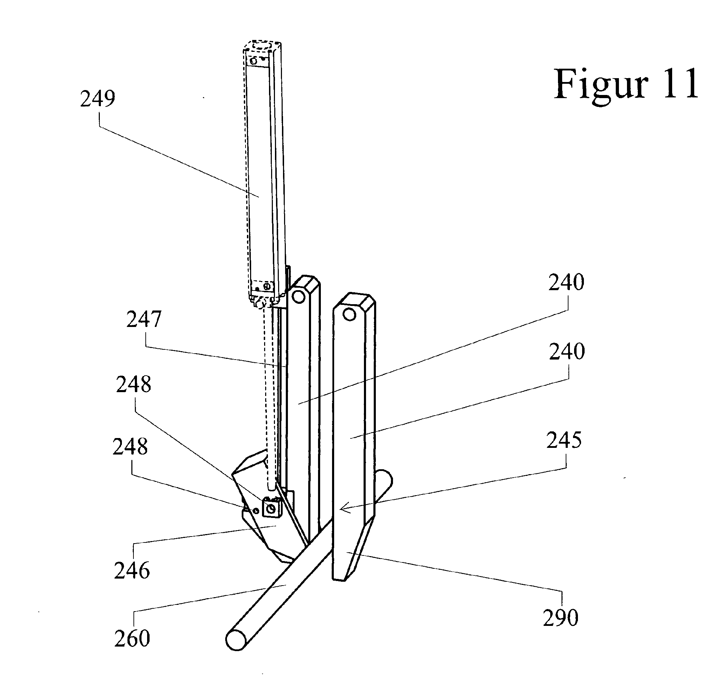

Alternativ zu dem bei dem Ausführungsbeispiel nach Figuren 3 und 4 vorgesehenen Zwischenhalter 143 kann, wie in Figuren 10 und 11 lediglich beispielhaft für ein Paar Rutschführungen 240 dargestellt, ein Werkstücktransport 245 vorgesehen sein. Dieser umfasst bei diesem Ausführungsbeispiel einen Haltehebel 246, welcher ähnlich wirkt, wie der Zwischenhebel 141 und letztlich den Abwerfer darstellt.

Jedoch ist dieser Haltehebel über Kulissenstifte 248, welche in einer Kulissenführung 247 laufen, vertikal verlagerbar, wobei er sich im unteren Bereich, also in der Nähe der Anlagen 290, öffnet, da dort die Kulissenführung 247 einen Bogen aufweist, wodurch der Haltehebel 246 über die Kulissenstifte 248 zu einer sich öffnenden Position gezwungen wird, wie dieses insbesondere in Figur 11 dargestellt ist.

Bei diesem Ausführungsbeispiel wird der Haltehebel 246 durch einen Zylinder 249 angetrieben, wobei es sich versteht, dass statt der Kulissenführung, der Kulissenstifte und des Zylinders auch andere Werkstücktransporte, wie beispielsweise auch umlaufende Kettenförderer oder ähnliches, vorgesehen sein können, mittels welcher ein Werkstück 260 entlang einer Rutschführung 240 transportiert werden kann.

Die in den Figuren 10 und 11 dargestellte Ausführungsform eignet sich insbesondere für verhältnismäßig schwere Werkstücke 260, wie beispielsweise für massive Stäbe mit verhältnismäßig großem Durchmesser. Sie gewährleistet, dass die Werkstücke 260 lediglich minimale Fallhöhen fallen müssen, wobei es letztlich von den Werkstücken 260 abhängt, welche Fallhöhen als zulässig erachtet werden. Ebenso versteht es sich, dass die Fallhöhen zu Beginn bzw. im oberen Bereich der Rutschführungen 240 durch die Wahl des oberen Todpunkts des Haltehebels 246 in geeigneter Weise gewählt werden können.

Auch diese Alternative hat gegenüber dem Stand der Technik den Vorteil, dass Sie verhältnismäßig einfach baut sowie schnell und betriebssicher stapeln kann, da nach wie vor ein wesentlicher Beitrag der Förderbewegung bis zum Stapeln durch das Eigengewicht des Werkstücks 260 bedingt ist.

### Bezugszeichenliste:

- 1: Hauptgestell
- 2: Ablagekörper
- 3: Ablage
- 4: Rutschführung
- 5: Rutschführungsheber
- 6: Werkstück
- 7: Stapel
- 8: Vereinzelungsvorrichtung
- 9: Anlage
- 22: Zusatzstützen
- 23: seitliche Wandungen
- 110: Hauptgestell
- 120: Ablagekörper
- 123: seitliche Wandungen
- 130: Ablage
- 140: Rutschführung
- 141: Zwischenhebel
- 142: Gegengewicht
- 143: Zwischenhalter
- 144: Trichterschräge
- 150: Rutschführungsheber
- 151: Tragebalken
- 152: Querbalken
- 153: Bewegungsrichtung
- 160: Werkstück
- 170: Stapel
- 180: Vereinzelungsvorrichtung
- 181: Quertransport
- 182: Zahn
- 183: Kettenförderer
- 184: Höhenverstellung
- 185: Rutsche
- 190: Anlage
- 240: Rutschführung
- 245: Werkstücktransport
- 246: Haltehebel
- 247: Kulissenführung
- 248: Kulissenstift
- 249: Zylinder
- 260: Werkstück
- 290: Anlage

## Patentansprüche

1. Vorrichtung zum Stapeln länglicher Werkstücke (6, 160) in definierten Stapelpositionen innerhalb eines Stapels (7, 170) auf einer Ablage (3, 130), wobei die Stapelvorrichtung eine Vereinzelungsvorrichtung (8, 180) und einen der Vereinzelungsvorrichtung (8, 180) nachgeordneten Gleit-Rutsch-Förderer (4, 140) mit einem Gestell umfasst, das vertikal und horizontal in eine Abwurf-/Ablageposition bezüglich der Ablage (3, 130) verlagerbar ist, **dadurch gekennzeichnet, dass** der Gleit-Rutsch-Förderer (4, 140) einen Abwerfer umfasst.

2. Stapelvorrichtung nach Anspruch 1, **dadurch gekennzeichnet, dass** der Abwerfer einen Zwischenhalter (143) umfasst, von dem aus das Werkstück (6, 160) jeweils fallengelassen werden kann.

3. Stapelvorrichtung nach Anspruch 1 oder 2, **dadurch gekennzeichnet, dass** der Gleit-Rutsch-Förderer einen Werkstücktransport, vorzugsweise einen senkrecht wirksamen Werkstücktransport (245), umfasst.

4. Vorrichtung zum Stapeln länglicher Werkstücke (6, 160) in definierten Stapelpositionen innerhalb eines Stapels (7, 170) auf einer Ablage (3, 130), wobei die Stapelvorrichtung eine Vereinzelungsvorrichtung (8, 180) und einen der Vereinzelungsvorrichtung (8, 180) nachgeordneten Abwerfer umfasst, insbesondere auch nach einem der vorstehenden Ansprüche, **dadurch gekennzeichnet, dass** der Abwerfer eine seitliche Anlage im Bereich der Stapelposition aufweist.

5. Stapelvorrichtung nach Anspruch 4, **dadurch gekennzeichnet, dass** die seitliche Anlage eine Anstelleinrichtung zur Anstellung der Anlage in Bezug auf die jeweilige Stapelposition umfasst.

6. Stapelvorrichtung nach Anspruch 4 oder 5, **dadurch gekennzeichnet, dass** der Abwerfer beidseits der Stapelposition eine seitliche Anlage aufweist.

7. Stapelvorrichtung nach einem der Ansprüche 4 bis 6, **dadurch gekennzeichnet, dass** die seitliche Anlage an einem Gestell des Abwerfers angeordnet ist.

8. Vorrichtung zum Stapeln länglicher Werkstücke (6, 160) in definierten Stapelpositionen innerhalb eines Stapels (7, 170) auf einer Ablage (3, 130), wobei die Stapelvorrichtung eine Vereinzelungsvorrichtung (8, 180) und einen der Vereinzelungsvorrichtung (8, 180) nachgeordneten Abwerfer umfasst, insbesondere auch nach einem der vorstehenden Ansprüche, **dadurch gekennzeichnet, dass** die Ablage Neigungsmittel aufweist.

9. Verfahren zum Stapeln länglicher Werkstücke (6, 160) in definierten Stapelpositionen innerhalb eines Stapels (7, 170), **dadurch gekennzeichnet, dass** die Werkstücke (6, 160) zunächst vereinzelt, durch Eigenbewegung in Richtung einer Abwurfposition gefördert und dann in ihre Stapelposition fallengelassen werden.

10. Stapelverfahren nach Anspruch 9, **dadurch gekennzeichnet, dass** eine Fallhöhe, aus welcher das Werkstück (6, 160) fallengelassen wird, größer als der halbe Werkstückdurchmesser, vorzugsweise größer als der Werkstückdurchmesser, ist.

11. Verfahren zum Stapeln länglicher Werkstücke (6, 160) in definierten Stapelpositionen innerhalb eines Stapels (7, 170), insbesondere auch nach Anspruch 9 oder 10, **dadurch gekennzeichnet, dass** zumindest die ersten Werkstücke (6, 160) der ersten Lage auf einer geneigten Ablage (3, 130) abgelegt werden und die Ablage vor dem Stapeln der zweiten Lage horizontal angeordnet wird.
